# EUROPEAN PATENT SPECIFICATION

(11) **EP 4 522 386 B1**
(45) Date of publication and mention of the grant of the patent: **27.05.2026**
(21) Application number: 23826602.7
(22) Date of filing: 19.06.2023
(51) Int. Cl.: B25J 17/00, B25J 9/12, B25J 13/08, B25J 19/00

(54) **ROBOT DRIVE UNIT FOR ROBOT JOINT**
ROBOTERANTRIEBSEINHEIT FÜR EIN ROBOTERGELENK
UNITÉ D'ENTRAÎNEMENT DE ROBOT POUR ARTICULATION DE ROBOT

(30) Priority: 20.06.2022 DK PA202200593
(43) Date of publication of application: 19.03.2025
(73) Proprietor: Universal Robots A/S, 5260 Odense S (DK)
(72) Inventor: JOHANSEN, Steffen Henrik, 5260 Odense S (DK)
(74) Representative: Fish & Richardson P.C.
(86) International application number: PCT/DK2023/050152
(87) International publication number: WO 2023/246995

(56) References cited:
- EP-A2- 3 208 054
- CN-A- 104 942 820
- CN-A- 107 471 246
- CN-A- 107 718 036
- CN-A- 108 098 832
- CN-A- 108 214 544
- CN-U- 208 663 866
- US-A- 4 678 952
- US-A1- 2021 197 404
- B SCH�FER ET AL: "Light-Weight Mechatronics and Sensorics for Robotic Exploration: a DLR Perspective", 25 February 2008 (2008-02-25), XP055358610, Retrieved from the Internet <URL:http://elib.dlr.de/55362/1/i-sairas2008_Sch�fer.pdf> [retrieved on 20170324]

## Description

### FIELD OF THE INVENTION

The present invention relates to a robot joint comprising a robot joint housing and an output flange rotatable in relation to the robot joint housing where the output flange is connectable to a neighbor robot element. The robot joint comprises a joint motor configured to rotate the output flange in relation to the robot joint housing via a gearing connected to the motor axel.

### BACKGROUND OF THE INVENTION

Robot arms comprising a plurality of robot joints and links where motors or actuators can move parts of the robot arm in relation to each other are known in the field of robotics. Typically, the robot arm comprises a robot base which serves as a mounting base for the robot arm; and a robot tool flange where to various tools can be attached. A robot controller is configured to control the robot joints in order to move the robot tool flange in relation to the base. For instance, in order to instruct the robot arm to carry out a number of working instructions. The robot joints may be rotational robot joints configured to rotate parts of the robot arm in relation to each other, prismatic joints configured to translate parts of the robot arm in relation to each other and/or any other kind of robot joints configured to move parts of the robot arm in relation to each other.

Typically, the robot controller is configured to control the robot joints based on a dynamic model of the robot arm, where the dynamic model defines a relationship between the forces acting on the robot arm and the resulting accelerations of the robot arm. Often, the dynamic model comprises a kinematic model of the robot arm, knowledge about inertia of the robot arm and other parameters influencing the movements of the robot arm. The kinematic model defines a relationship between the different parts of the robot arm and may comprise information of the robot arm such as, length, size of the joints and links and can for instance be described by Denavit-Hartenberg parameters or like. The dynamic model makes it possible for the controller to determine which torques and/or forces the joint motors or actuators shall provide in order to move the robot joints for instance at specified velocity, acceleration or in order to hold the robot arm in a static posture.

Robot arms need to be programmed by a user or a robot integrator which defines various instructions for the robot arm, such as predefined moving patterns and working instructions such as gripping, waiting, releasing, screwing instructions. The instruction can be based on various sensors or input signals which typically provide a triggering signal used to stop or start at a given instruction. The triggering signals can be provided by various indicators, such as safety curtains, vision systems, position indicators, etc.

Typically, it is possible to attach various end effectors to the robot tool flange or other parts of the robot arm, such as grippers, vacuum grippers, magnetic grippers, screwing machines, welding equipment, dispensing systems, visual systems etc.

WO2019/219886A9 illustrates a robot joint housing formed as a t-connection of two pipes where an output flange extends out of one end of the upper pipe and the other end of the upper pipe is closed by an end cap (not shown in WO2019/219886A9). The windings of a motor stator are pressed into a central part of the housing and the other components of the robot joint housing are thereafter mounted inside the housing from both ends of the upper pipe. Similarly, CN107718036A and CN108214544A show robot joint housings where a motor, gear, brake, encoders and circuits are arranged inside the robot joint housing and where an output flange extends out of one end of the robot housing. Like in WO2019/219886A9 the components are mounted directly to different parts of the robot joint housing and are also mounted from both ends of the joint housing, which makes is complicated to manufacture the robot joints and also makes it difficult to service the robot joint housing at late point in time. Resulting in longer down time of the robot arm in case of need service which results in lost of work as the work

Robot arms are difficult to manufacture as robot arms comprises many complicated components that requires knowhow and precise assembly processes in order to manufacture robot arms with the quality that customers require. Especially the robot joints comprise many complicated components such as a motor unit, a gear unit, circuit boards, wires, various sensors/encoders, an output flange etc. which requires a complicated manufacturing process.

CN 104942820 describes a space humanoid robot arm joint. The space humanoid robot arm joint comprises a joint driving assembly, a joint transmission assembly and a joint electrical assembly. The joint driving assembly comprises a locking nut (11), a brake rotating disc (12), a brake permanent magnet (13), a bearing gland (14), a motor shell (15), a bearing retainer ring (16), a first bearing (17), a transmission shaft (18), a motor rotor (19), a motor stator (110), a second bearing (111), a first angle measuring element rotor (112), an adjustment sleeve (113), a motor clamping sheet (114), an angle measuring element reading head (115), a first connecting key (116), a second connecting key (117), a pressing gasket (118) and a shaft sleeve (119).

Schaefer et al. (available at https://elib.dlr.de/55362/1/i-sairas2008 Sch%C3%A4fer.pdf) describe a light-weight mechatronics and sensorics for robotic exploration.

EP 3208054 describes a robot joint drive that has an encoder.

CN 208663866 describes brake equipment that is used for a robot joint arm and is equipped with drive arrangement in the robot joint arm. The drive arrangement has a drive shaft. The brake equipment includes a brake block, an electro-magnet, and armature. The electro-magnet is equipped with the elastic component between the armature.

### SUMMARY OF THE INVENTION

The objective of the present invention is to address the above described limitations with the prior art or other problems of the prior art. This is achieved by a robot joint and a method for providing a robot joint as described by the independent claims. In summary, the robot joint comprises an angled joint housing forming a joint cavity having an opening at one end of the robot joint housing, the joint housing comprises a connection flange configured to be interconnected with a further robot element, where a robot drive unit is slidable arranged in the joint cavity through the opening. The robot drive unit is configured to rotate an output flange of the robot joint and comprises the following component in a stacked configuration: a drive unit circuit board, a drive unit motor unit, a drive unit gear, a brake arranged between the drive unit circuit board and the drive unit motor unit, an input encoder assembly arranged between the drive unit motor unit and the drive unit gear.
Providing a robot joint comprising a robot housing and a robot drive unit with the above mentioned component in the above mentioned stacked configuration makes it possible to provide a stable, reliable and easy to manufacture robot joint, as the robot drive unit due to the stacked configuration where the input encoder assembly is arrange between the drive unit motor unit and the drive gear unit make it possible to reduce input encoder reduce errors caused by eccentric movements of the motor axle, as such eccentric movements are low between the drive unit motor unit and the drive gear unit. Further the stacked configuration makes it possible to reduce the complexity of the manufacturing process as the robot drive unit can be assembled outside the robot housing and there is no need for mounting components through multiple openings of the robot arm. Also, it makes it possible to encapsulate the input encoder in a cavity between the drive unit motor unit and drive unit gear. Thereby the input encoder is well protected against damages during the assembly process and during operation of the robot arm as moist and dust cannot enter the cavity between the drive unit motor unit and the drive unit gear. Further the robot drive unit can easy be serviced and/or replaced as the robot drive unit can be removed in a simple and fast way by sliding it our of the joint cavity.

The dependent claims describe possible embodiments of the method according to the present invention. The advantages and benefits of the present invention are described in the detailed description of the invention

### BRIEF DESCRIPTION OF THE DRAWINGS

Fig. 1 illustrates a prior art robot system comprising a robot arm;
fig. 2A-2B illustrates a structural cross-sectional view of a robot joint comprising a robot drive unit according to the present invention;
fig.3 illustrates a cut-away perspective view of an embodiment of a robot joint comprising a drive unit according to the present invention;
figs. 4A-4C illustrate different views of an embodiment of a robot joint comprising a drive unit according to the present invention;
figs. 5A and 5b illustrate different views of a drive unit for a robot joint according to the present invention.

### DETAILED DESCRIPTION OF THE INVENTION

The present invention is described in view of exemplary embodiments only intended to illustrate the principles of the present invention. The skilled person will be able to provide several embodiments within the scope of the claims. Throughout the description, the reference numbers of similar elements providing similar effects have been given the same last two digits. Further it is to be understood that in the case that an embodiment comprises a plurality of the same features then only some of the features may be labeled by a reference number.

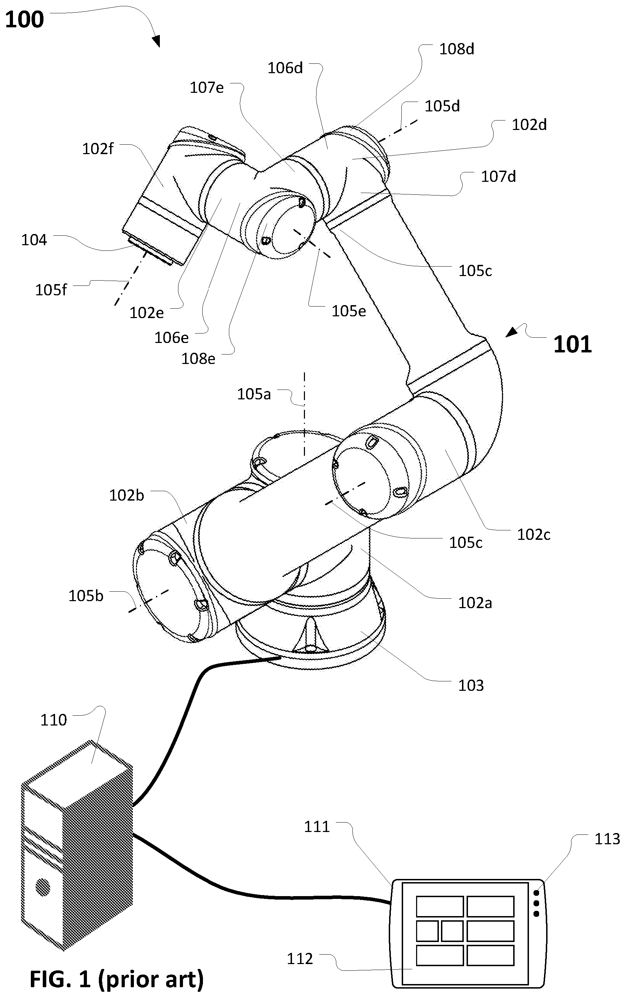

Fig. 1 illustrates a robot system 100 as known in the prior art. The robot system comprises at least one robot arm 101 and at least one robot controller 110 configured to control the robot arm.

The robot arm 101 comprises a plurality of robot joints 102a, 102b, 102c, 102d, 102e, 102f connecting a robot base 103 and a robot tool flange 104. A base joint 102a is configured to rotate the robot arm around a base axis 105a (illustrated by a dashed dotted line); a shoulder joint 102b is configured to rotate the robot arm around a shoulder axis 105b (illustrated by a dashed dotted line); an elbow joint 102c is configured to rotate the robot arm around an elbow axis 105c (illustrated by a dashed dotted line); a first wrist joint 102d is configured to rotate the robot arm around a first wrist axis 105d ((illustrated by a dashed dotted line) and a second wrist joint 102e is configured to rotate the robot arm around a second wrist axis 105e (illustrated by a dashed dotted line). Robot joint 102f is a robot tool joint comprising the robot tool flange 104, which is rotatable around a tool axis 105f (illustrated by a dashed dotted line). The illustrated robot arm is thus a six-axis robot arm with six degrees of freedom with six rotational robot joints, however it is noticed that the present invention can be utilized in robot arms comprising less or more robot joints.

The robot joints comprise a robot joint housing and an output flange rotatable or translatable in relation to the robot joint housing and the output flange is connected to a neighbor robot joint either directly or via an arm section as known in the art. The robot joint comprises a joint motor configured to rotate or translate the output flange in relation to the robot joint housing, for instance via a gearing or directly connected to the motor shaft. The robot joint housing can for instance be formed as a joint housing and the joint motor can be arranged inside the joint housing and the output flange can extend out of the joint housing. Additionally, the robot joints can comprise at least one joint sensor providing a sensor signal for instance indicative of at least one of the following parameters: an angular and/or linear position of the output flange, an angular and/or linear position of the motor shaft of the joint motor, a motor current of the joint motor or an external force and/or torque trying to rotate the output flange or motor shaft. For instance, the angular position of the output flange can be indicated by an output encoder such as optical encoders, magnetic encoders which can indicate the angular position of the output flange in relation to the robot joint. Similarly, the angular position of the joint motor shaft can be provided by an input encoder such as optical encoders, magnetic encoders which can indicate the angular position of the motor shaft in relation to the robot joint. It is noted that both output encoders indicating the angular position of the output flange and input encoders indicating the angular position of the motor shaft can be provided, which in embodiments where a gearing have been provided makes it possible to determine a relationship between the input and output side of the gearing. Each of the robot joint housings is formed as a t-connection of pipes, where the upper part 106d, 106e (only indicated for robot joints 105d, 105e) comprises the joint motor, the joint gear, the joint sensors/encoders and joint control circuits and the lower part 107d, 107e (only indicated for robot joints 105d, 105e) comprises an input flange (not visible) for connecting the robot housing to another robot joint or another robot part. The output flange extends out of one end of the upper pipe and the other end of the upper pipe is closed by an end cap 108e, 108d (only indicated for robot joint 105d). The windings of the motor stator are pressed into a central part of the housing and the other components are thereafter mounted inside the housing from both ends of the upper pipe.

The robot system comprises at least one robot controller 110 configured to control the robot arm 101. The robot controller is configured to control the motions of the parts of the robot arm and the robot joints for instance by controlling the motor torque provided to the joint motors based on a dynamic model of the robot arm, the direction of gravity acting and the joint sensor signal. Further the robot controller may control the motions of the robot arm based on a robot program stored in a memory of the robot controller. The controller can be provided as an external device as illustrated in fig. 1 or as a device integrated into the robot arm or as a combination thereof.

The robot controller can comprise an interface device 111 enabling a user to control and program the robot arm. The interface device can for instance be provided as a teach pendent as known from the field of industrial robots which can communicate with the controller via wired or wireless communication protocols. The interface device can for instanced comprise a display 112 and a number of input devices 113 such as buttons, sliders, touchpads, joysticks, track balls, gesture recognition devices, keyboards, microphones etc. The display may be provided as a touch screen acting both as display and input device. The interface device can also be provided as an external device configured to communicate with the robot controller, for instance in form of smart phones, tablets, PCs, laptops etc.

The robot system may also comprise an end effector (not illustrated) attached to the robot tool flange 104 and it is to be understood that the end effector can be any kind of end effector such as grippers, vacuum grippers, magnetic grippers, screwing machines, welding equipment, gluing equipment, dispensing systems, painting equipment, visual systems, cameras etc.

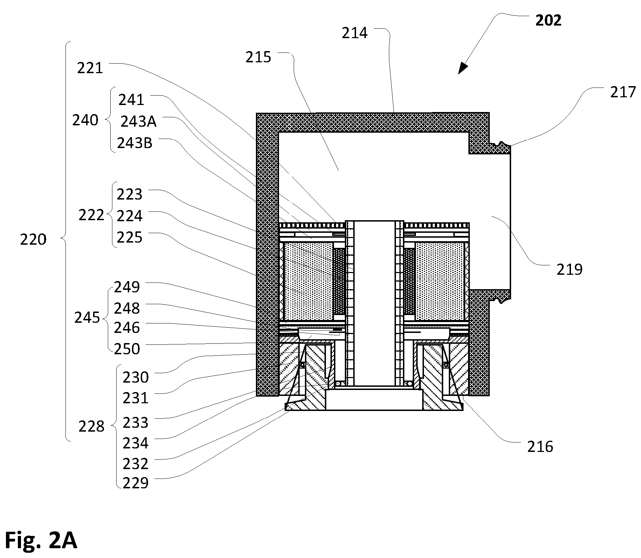

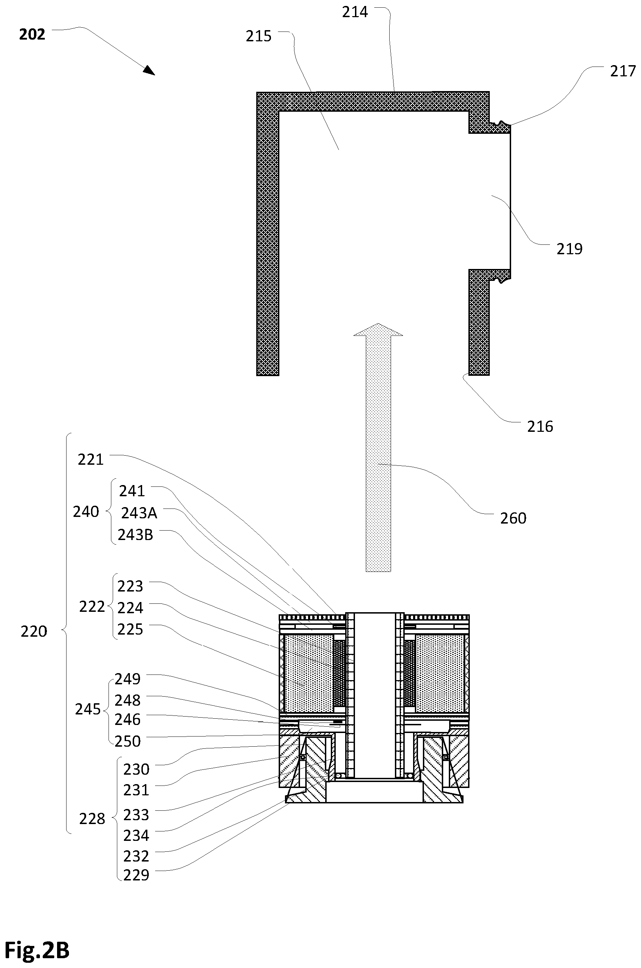

Fig. 2A and 2B illustrate a structural cross-sectional view of a robot joint 202 according to the present invention; where fig. 2A illustrates the robot joint 202 with a drive unit 220 according to the present invention arrange inside an angled robot joint housing 214, and fig. 2B illustrates the robot joint with the drive unit 220 arranged outside the angled robot joint housing 214.

The robot joint 202 comprises an angled joint housing 214 forming a joint cavity 215 having a circular opening 216 at one end of the robot joint housing. The joint housing comprises a connection flange 217 configured to be interconnected with a further robot element such as a further robot joint, robot link or robot base. The angled connection flange 217 is provided at an angle of 90 degree in relation to the circular opening 216. The robot housing comprises only two openings which give access to the joint cavity, and they are angled 90 degrees, where the opening 216 at the end of the robot joint housing constitutes a first opening and where a second opening 219 is provided between the connection flange and the joint cavity. This is in contrast to the prior art where the joint housing comprises three openings giving access to the joint cavity. Reducing the number of openings makes it possible to provide a stronger joint housing and the thickness of the wall of the joint housing can thus be reduced whereby a lighter robot joint can be provided. It is also possible to close the opening between the angled connection flange whereby the joint cavity only will have a single opening, however in robot joints a small opening into the joint cavity from the angled connection flange makes it possible to ensure that wires providing power and/or communication signals through the joint. The second opening 219 between the connection flange and the joint cavity can be surrounded by the connection flange, whereby wires providing power and/or communication can be connected to the further robot element through the seconded opening inside the connecting flange.

The robot joint comprises a robot drive unit 220 configured to rotate an output flange of a robot joint, the robot drive unit comprises the following component in a stacked configuration:
∘ a drive unit circuit board 221;
∘ a drive unit motor unit 222 comprising a motor axel 223 with a magnetic motor rotor 224 mounted on the motor axel and a motor stator 225 configured to rotate the motor rotor and the motor axel;
∘ a drive unit gear 228 driven by the motor axel and configured to rotate the output flange 229;
∘ a brake assembly 240 arranged between the drive unit circuit board 221 and the drive unit motor unit 222, where the brake assembly comprises an annular brake member 241 arranged on the motor axle;
∘ an input encoder assembly 245 arrange between the drive unit motor unit 222 and the drive unit gear 228, the input encoder assembly comprises an input encoder track 246 fixed to the motor axel and an input encoder reader head 248 configured to read the position of the input encoder track.
A drive unit having this stacked configuration of components makes it possible to provide a reliable and robust drive unit for a robot joint which can be assembled fast and easy outside the robot joint housing and then inserted into the robot housing once assembled. Providing the encoder assembly between the drive unit motor unit and the drive unit gear results in an improvement accuracy of the encoder, as encoder errors due to eccentric movements of the motor causing errors in encoder readings are reduced due to the fact that the motor axel experiences fewer eccentric movements at the position between the drive unit motor input and the drive unit gear than at the position above the motor drive unit, where the input encoders are arranged in the prior art. Further in an embodiment the input encoder assembly comprises an intermediate input encoder holder 249 supporting the encoder reader head 248, where one side of the intermediate input encoder holder is attached to the drive unit gear 228 and the other side of the intermediate input encoder holder is attached to a drive unit motor unit 222. The input encoder holder forms an input encoder cavity 250 between the drive unit motor unit 222 and the drive unit gear 228, and the input encoder track and the encoder head are arranged in the cavity. This makes it possible to encapsulate the input encoder in the cavity for instance by providing the input encoder holder as a circular wall surrounding the motor axel. Consequently, the input encoder track and input encoder reader head can be protected from moist and dirt which can reduce the accuracy and stability of the encoder readings. Further, the robot drive unit can then be provided as a separate unit which can be transported and stored independently of the robot housing without the risk of moist and dirt effecting the encoder unit. This is useful in connection with service situations where the robot drive unit need to be serviced or replaced, as the robot drive unit can be removed for the robot joint housing and shipped to service with out the risk of damaging the encoder assembly and new robot drive unit can be shipped for replacement without the risk of damaging the encoder assembly.

The drive unit circuit board comprises electronics, circuits and/or processors controlling the drive unit motor unit. The drive unit circuit board can also be connected to the input encoder and an eventual output encoder (not shown) and be configured to control the drive unit based on the sensed values as known in the art of robot control. Also, the drive circuit board can comprise means for receiving and sending data signals to other robot joints and/or a central robot controller.

In the illustrated embodiment the brake assembly is arranged between the drive unit circuit board 221 and the drive unit motor unit 222 is a disc brake system where the annular brake member is provided as a disc brake arranged on the motor axle and where two brake pads 243A, 243B are configured to be pushed against the disc brake upon a desired braking operation. In other embodiments the brake assembly can be provided as an annular ring comprising a number of brake protrusions extending outward in relation to the annular ring and where an engagement member (not shown) is configured to engage with the annular brake member and thereby breaking the rotation of the motor axel. The annular brake assembly can be provided as known in the prior art for instance any of the brake assemblies described in WO2019/219866A9.

The motor stator comprises a number of motor windings arranged in a motor stator sleeve forming the outer part of the motor stator, however throughout the specification the motor stator is simply referred to a motor stator.

The robot drive unit is slidable into the joint cavity 215 of joint housing 214 through the opening of the robot joint housing. This is achieved by providing the joint cavity with an inner cross section that matches the outer cross section of the robot drive unit, such that the dimensions of the inner cross section and the outer cross section matches to allow the robot drive unit to be slid into the robot cavity as indicated by arrow 260. It is noted that the inner side wall of the robot cavity can be provided with inner recesses while the robot drive unit is provided with outer protrusions matching into the inner recesses. Different matching inner recesses and outer protrusions can be provided to the inner wall and outer structure of the drive unit in order to ensure the robot drive unit only can be slid into the joint cavity in a correct orientation in the relation to the robot joint housing. Although the opening at the end of the robot joint has been described as a circular opening the skilled person will understand that the opening can have other shapes as long as the dimension of the opening allows the robot drive unit to be slid into the joint cavity through the opening.

The drive unit gear can be provided as any kind of gear capable of transferring rotation of the motor axel to the output axel at a desired gear ratio. Example of gears can be solar/planet gears, circular wave gears or strain wave gears. In the illustrated embodiment a drive unit gear 228 is provided as a strain wave gear comprising an outer ring 231 rotatably supporting an inner ring 230 connected to the output flange 229. The inner ring comprises an internal toothed gear 232; a flex spline 233 arranged in the inner ring, the flex spline comprises a flexible part comprising an external toothed gear partly meshing with the internal toothed gear. A wave generator 234 is driven by the motor axel 223 is upon rotation configured to flex the flexible part in a radial direction to partly mesh the external toothed gear with the internally toothed gear, where rotation of the wave generator moves meshing positions of the gears in a circumferential direction causing the inner ring to rotate in relation to the outer ring. It is to be understood that the strain wave gear can be provided as any kind of strain wave gears.

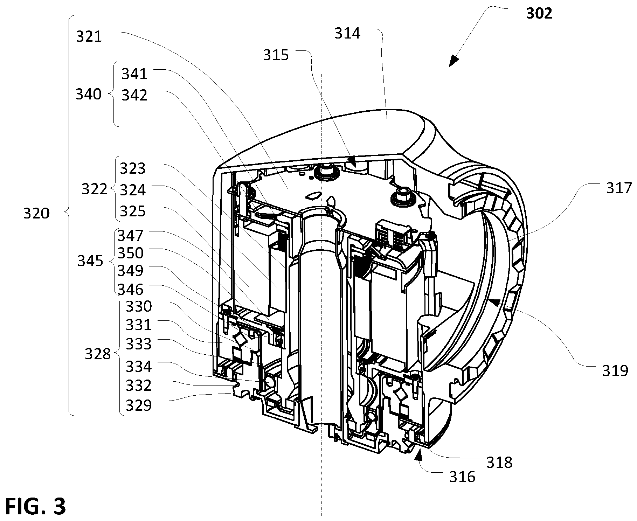

Fig. 3 illustrate a robot joint 302 according to the present invention. Fig. 3 is a perspective cut-away view showing a cross-sectional view of the robot joint. The robot joint comprises an angled joint housing 314 forming a joint cavity 315 having a circular opening 316 at one end of the robot joint housing. The joint housing comprises a connection flange 317 configured to be interconnected with a further robot element such as a further robot joint, robot link or robot base. The angled connection flange 317 is provided at an angle of 90 degree in relation to the circular opening 316.

A robot drive unit 320 is arrange in the robot cavity by sliding the robot drive unit through the circular opening 316. The robot drive unit comprises the following components in a stacked configuration:
∘ a drive unit circuit board 321 comprising electronics, controllers and/or processors for controlling the robot joint motor 322.
∘ a drive unit motor unit 322 comprising a motor axel 323 with a magnetic motor rotor 324 mounted on the motor axel and a motor stator 325 configured to rotate the motor rotor and motor axel. The motor axel and motor rotor can be rotated by energizing motor windings of the motor stator as known in the art of motor control.
∘ a drive unit gear 328 is driven by the motor axel and configured to rotate an output flange 329. The drive unit gear 323 is provided as a strain wave gear, where output flange 329 is connected to the inner ring 330 of a strain wave gear comprising an outer ring 331, wherein the inner ring 330 is rotatably arranged. The inner ring comprises an internal toothed gear 332 and a flex spline 333 is arranged in the inner ring, the flex spline comprises a flexible part comprising an external toothed gear partly meshing with the internal toothed gear. A wave generator 334 is arranged in the flex spline and is rotatable in relation to the flex spline and is configured to flex the flexible part in a radial direction to partly mesh the external toothed gear with the internally toothed gear, where rotation of the wave generator moves meshing positions of the gears in a circumferential direction causing the inner ring to rotate in relation to the outer ring. In the illustrated embodiment a part of the inner ring extends out of the outer ring and of the robot and constitutes an outwardly protruding output flange 329. The output flange extends out of the circular opening when the robot drive unit is arranged in the joint cavity. The output flange and strain wave gear can for instance be provided as the strain wave gear disclosed in WO 2019/096923 and/or as described in the Danish patent application DK PA 2021 70142, the European patent application EP 21216445.3, the US patent application US 17/553,110 and the Chinese patent application CN 202210042102.4. However, it is to be understood that the strain wave gear can be provided as any kind of strain wave gears e.g. as disclosed in US 5,906,142; US 5,775,178; US 8,991,282. It is noted that the gear unit alternatively can be provided as another kind of gear unit e.g. solar/planet gears or circular wave gears.
∘ a brake assembly 340 is arranged between the drive unit circuit board 321 and a drive unit motor unit 322. The annular brake assembly comprises an annular brake member 341 arranged on the motor axle and an engagement member (not shown as it is arranged at the part cut-away in the drawing) is configured to engage with the annular brake member and thereby braking rotation of the motor axel. The annular brake member comprises a number of brake protrusions 342 extending outward in relation to the center of the annular brake member. The annular brake assembly can be provided as known in the prior art for instance any of the brake assemblies described in WO2019/219866A9.
∘ an input encoder assembly is arranged between the drive unit motor unit 322 and the drive unit gear 328. The input encoder assembly comprises an input encoder track 346 fixed to the motor axel and an encoder reader circuit 347 comprising an encoder reader head configured to read the position of the encoder track. An intermediate input encoder holder 349 supporting the encoder reader circuit 347 is provided between the drive unit gear 328 and the drive unit motor unit 322. The input encoder holder 349 forms an input encoder cavity 350 between the drive unit motor unit 322 and the drive unit gear 328, where the input encoder track 346 and the encoder head are arranged. The encoder technology can be magnetic, optical, inductive, or other. Providing the encoder assembly between the drive unit motor and the drive unit gear unit results in an improvement of the accuracy of the encoder, as encoder errors due to eccentric movements of the motor axel are reduced, as the motor axel experiences fewer eccentric movements at the position between the drive unit motor unit and the drive unit gear than at the position above the motor drive unit, where the input encoders are arranged in the prior art.

A sealing member 318 is arranged between the inner wall of the opening 316 of the robot joint housing and a part of the robot drive unit. In the illustrated embodiment the sealing member is provide as a circular sealing member providing a tight seal between the inner wall of the robot housing and an outer part of the inner ring below the output flange.

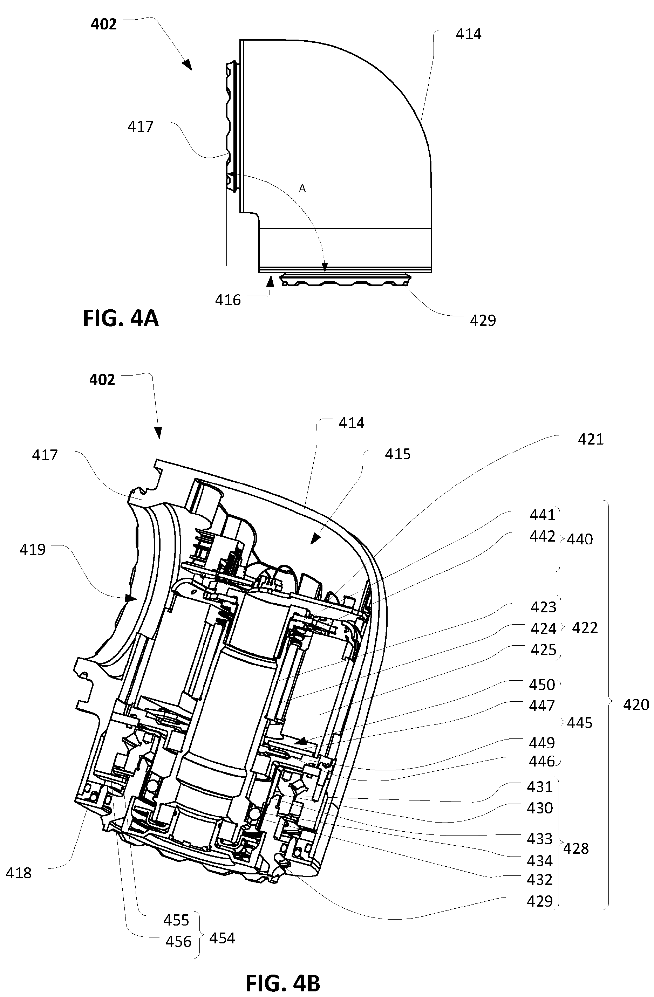

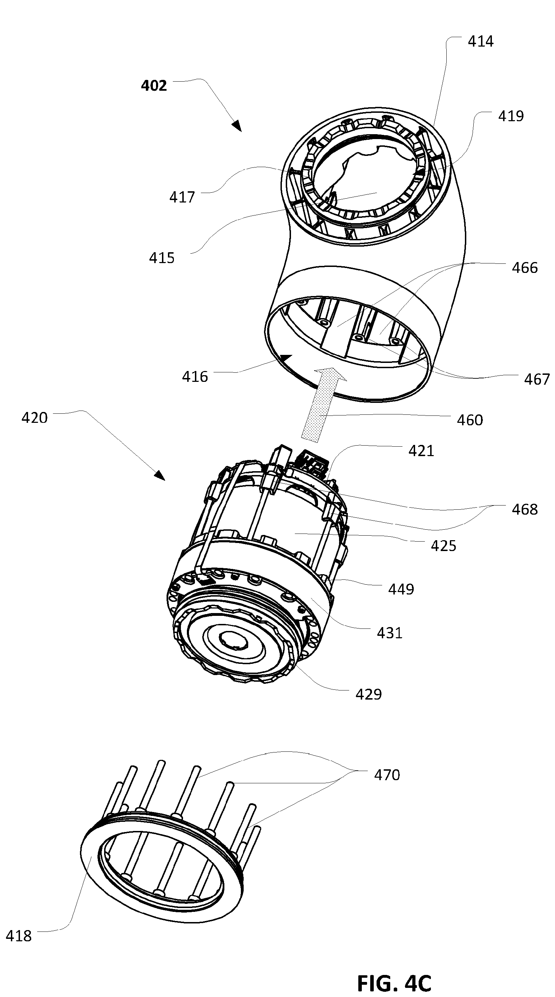

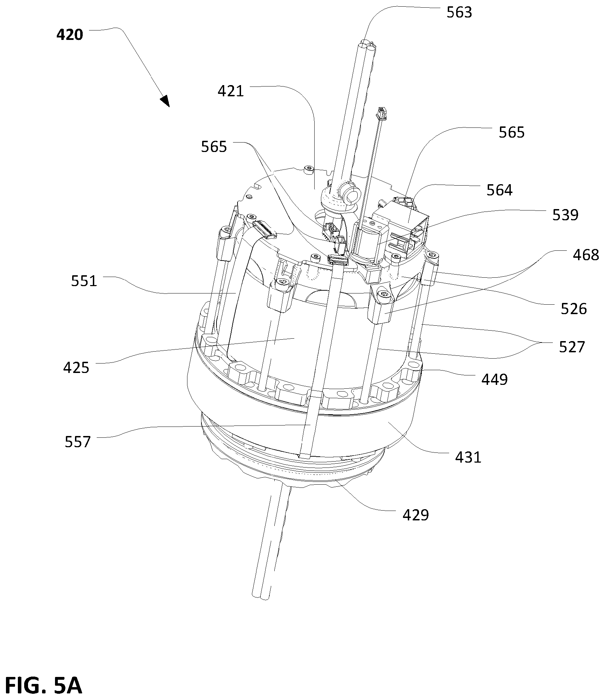

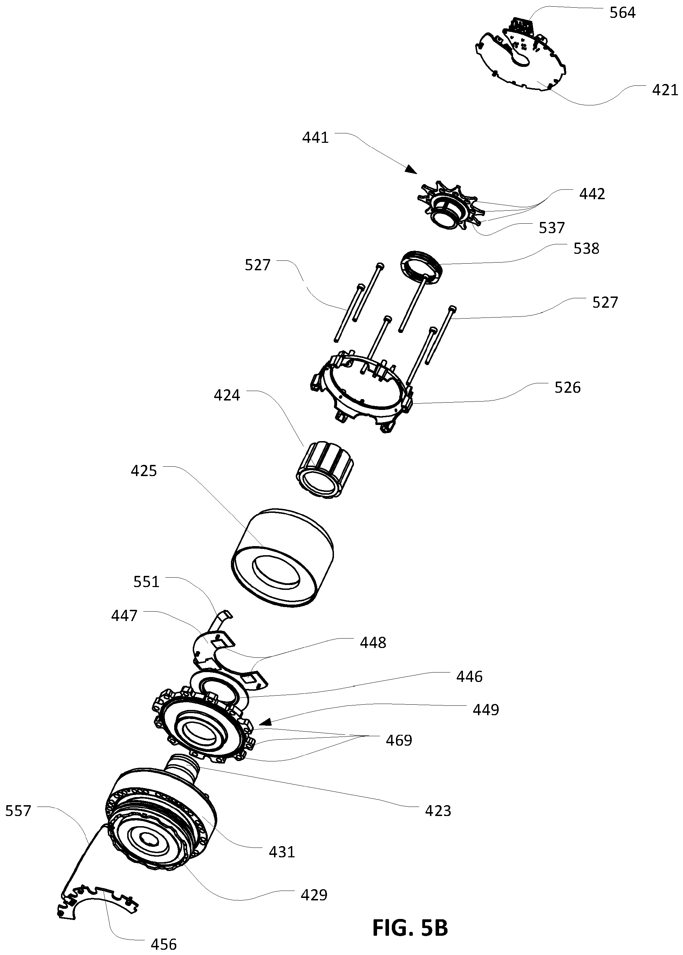

Fig. 4A-4C illustrate a robot joint 402 according to the present invention. Fig. 4A is a side view, fig. 4B is a perspective cut-away view showing a cross-sectional view of the robot joint and fig 4C is a perspective view illustrating the robot drive unit 420 outside the robot joint. Some details of the robot drive unit will not be described in figs. 4A-4C as further details of the robot drive unit is described in figs. 5A and 5B.

The robot joint comprises an angled joint housing 414 forming a joint cavity 415 having a circular opening 416 at one end of the robot joint housing. The joint housing comprises a connection flange 417 configured to be interconnected with a further robot element such as a further robot joint, robot link or robot base. The angled connection flange 417 is provided at an angle A of 90 degree in relation to the circular opening 416. The output flange extends out of the robot joint through the opening and the output flange is also angled 90 degrees in relation to the connection flange.

A robot drive unit 420 is arrange in the robot cavity by sliding the robot drive unit through the circular opening 416. The robot drive unit comprises the following components in a stacked configuration:
∘ a drive unit circuit board 421
∘ a drive unit motor unit 422
∘ a drive unit gear 428;
∘ a brake assembly 440 arranged between the drive unit circuit board 421 and the drive unit motor unit 422;
∘ an input encoder assembly 445 arranged between the drive unit motor unit 422 and the drive unit gear 428.
The features and elements illustrated in figs 4A-4C functions in a similar way as the features having the same last two digits in fig. 3 and will not be described again.

In addition, an output encoder assembly 454 is illustrated. The output encoder assembly is provided as a part of the drive unit gear and comprises an output encoder track 455 and an output encoder circuit board 456 comprising an output encoder reader head (not shown). In the illustrated embodiment the output encoder assembly is integrated into the strain wave gear as disclosed in Danish patent application DK PA 2021 70142, the European patent application EP 21216445.3, the US patent application US 17/553,110 and the Chinese patent application CN 202210042102.4. However, the output encoder can also be provided as disclosed in WO 2019/096923A2

As illustrated in fig. 4C the robot drive unit 420 is slidable into the joint cavity 415 of joint housing 414 through the opening 416 of the robot joint housing. This is achieved by providing the joint cavity with an inner cross section that matches the outer cross section of the robot drive unit, such that the dimensions of the inner cross section and the outer cross section matches to allow the robot drive unit to be slid into the robot cavity as indicated by arrow 460. In this embodiment the inner side wall of the robot cavity is provided with a plurality of inner recesses 466 separated by a number of inner protrusions 467. The robot drive unit is provided with outer protrusions 468 matching into the inner recesses 466. The intermediate input encoder holder 449 comprises a plurality of support protrusions 469 matching the inner protrusions 468. The support protrusions 469 will be arranged onto and aligned with the inner protrusions 468 when the robot drive unit is correctly arranged inside the joint cavity. The outer ring 431 of the strain wave gear and the support protrusions comprises a plurality of holes matching threaded holes of the inner protrusions. Consequently, the robot drive unit can be secured inside the robot housing by a number of fastening screws 470 (partially hidden behind the seal 418) through the outer ring and the input encoder holder.

Figs. 5A and 5B illustrate the robot drive unit 420 of the robot joint 402 illustrated in figs. 4A-4C. Fig. 5a illustrates a perspective view of the robot drive unit and fig. 5b illustrates an exploded perspective view of the robot drive unit. The robot drive unit is identical to the robot drive unit 420 in fig. 4A-4B and figs. 5A and 5B serve to described further details and aspects of the robot drive unit. Identical elements and features have been given the same reference numbers as in figs. 4A-4C and will not be described further.

In fig. 5A a number of signal and/or power wires 563 are running through the robot drive unit inside the hollow motor axel. The signal and/or power wire can be provide as known in the art and can for instance be connected to the drive circuit board via a power and/or signal connector 564 (note that the pairing connector is not illustrated on the wire 563). A number of other connectors 565 are shown on the drive circuit board 421, where one of the connectors is connected to the input encoder reader circuit 447 (not visible in fig. 5A) via an input encoder wire 551 while another connector is connected to the output encoder circuit board 456 (not visible in fig. 5A) via an output encoder wire 557.

The robot drive unit comprises a motor stator cap 526 arranged at one end of the motor stator 425. The motor stator cap is directly connected to the drive unit gear by a number of connecting members 527 in form of rods arranged on the outside of the motor stator. The connecting rods can be provided as connecting screws which can be inserted into holes in the protrusions 568 and screwed into threaded holes of the outer part of the drive unit gear. The drive unit motor unit 422, the drive unit gear 428 and the input encoder assembly 445 arranged between the drive unit motor unit 422 and the drive unit gear 428 can hereby be held in a tight configuration providing a stable construction of the robot drive unit.

The drive unit circuit 421 is attached to the motor stator cap 526 and the motor stator cap 526 forms a cavity between the motor stator 425 and the drive unit circuit board. The annular brake member 441 is arranged in the cavity formed between the motor stator and drive unit circuit board.

The robot drive unit comprises an engagement member configured to engage with the annular brake member and thereby braking rotation of the motor axel. The engagement member is provided as a brake solenoid 539 (not illustrated in fig. 5C) configured to push a rachet (not shown) into engagement with the brake protrusions 442 of the annual brake member 441 upon activation of the motor brake. The brake solenoid is attached to the motor stator cap. The brake assembly comprises also a friction member 537 and a spring member configured to apply a friction force to between the annular brake member and the motor axel as for instance as disclosed in WO2019/219866A9.

Summarizing the present invention makes it possible to provide a relatively simple, reliable, and stable robot joint which is easy to assemble.

### BRIEF DESCRIPTION OF FIGURE REFERENCES

| | |
|---|---|
| 100 | robot system |
| 101 | robot arm |
| 102a-102f, 202, 302, 402 | robot joint |
| 103 | robot base |
| 104 | robot tool flange |
| 105a-105f | robot joints axis |
| 106d, 106e | upper part of robot joint housing |
| 107d, 107e | lower part of robot joint housing |
| 108d, 108e | end cap |
| 110 | robot controller |
| 111 | interface device |
| 112 | display |
| 113 | input devices |
| 214, 314, 414 | angled joint housing |
| 215, 315, 415 | joint cavity |
| 216, 316, 416 | opening |
| 217, 317, 417 | connecting flange |
| 318, 418 | seal |
| 219, 319, 419 | second opening |
| 220, 320, 420 | robot drive unit |
| 221, 321, 421 | drive unit circuit bord |
| 222, 322, 422 | drive unit motor unit |
| 223, 323, 423 | motor axel |
| 224, 324, 424 | motor rotor |
| 225, 325, 425 | motor stator |
| 526 | motor stator cap |
| 527 | connecting member |
| 228, 328, 428 | drive unit gear |
| 229, 329, 429 | output flange |
| 230, 330, 430 | inner ring |
| 231, 331, 431 | outer ring |
| 232, 332, 432 | internal toothed gear |
| 233, 333, 433 | flex spline |
| 234, 334, 434 | wave generation |
| 537 | friction member |
| 538 | spring member |
| 539 | brake solenoid |
| 240, 340, 440 | brake assembly |
| 241, 341, 441 | annular brake member |
| 342, 442 | brake protrusion |
| 243A, 243B | brake pad |
| 345, 445 | input encoder assembly |
| 246, 346, 446 | input encoder track |
| 347, 447 | input encoder reader circuit |
| 248, 448 | input encoder reader head |
| 249, 349, 449 | intermediate input encoder holder |
| 250, 350, 450 | input encoder cavity |
| 551 | input encoder wire |
| 454 | output encoder assembly |
| 455 | output encoder track |
| 456 | output encoder circuit board |
| 557 | output encoder wire |
| 260, 460 | sliding arrow |
| 563 | power and signal wires |
| 564 | power and/or signal connector |
| 565 | other connectors |
| 466 | inner recesses |
| 467 | inner protrusions |
| 468 | outer protrusions |
| 469 | support protrusions |
| 470 | fastening screws |

## Claims

1. A robot joint (202, 302, 402) for a robot arm, said robot joint comprises:
• an angled joint housing (214, 314, 316) forming a joint cavity (215, 315, 415) having an opening (216, 316, 416) at one end of the robot joint housing, said joint housing comprises a connection flange (217, 317, 417) configured to be interconnected with a further robot element;
• a robot drive unit (220, 320, 420) configured to rotate an output flange (229, 329, 429) of said robot joint, where said robot drive unit is slidable arranged in said joint cavity through said opening and in a position where said output flange extends out of said opening, wherein said robot drive unit comprises the following components in a stacked configuration:
∘ a drive unit circuit board (221, 321, 421);
∘ a drive unit motor unit (222, 322, 422) comprising a motor axel (223, 323, 423) with a magnetic motor rotor (224, 324, 424) mounted on said motor axel and a motor stator (225, 325, 425) configured to rotate said motor rotor and said motor axel;
∘ a drive unit gear (228, 328, 428) driven by said motor axel and configured to rotate said output flange (229, 329, 429);
∘ a brake assembly (240, 340, 440) arranged between said drive unit circuit board and said drive unit motor unit, where said brake assembly comprises an annular brake member (241, 341, 441) arranged on said motor axle;
∘ an input encoder assembly (245, 345, 445) arranged between the drive unit motor unit and the drive unit gear, said input encoder assembly comprises an input encoder track (246, 346, 446) fixed to said motor axel and an input encoder reader head (248) configured to read the position of said input encoder track.

2. The robot joint according to claim 1, wherein an inner cross section of said joint cavity matches the outer cross section of said robot drive unit.

3. The robot joint according to any one of claims 1-2, wherein the inner side wall of said robot cavity is provided with inner recesses and said the robot drive unit is provided with outer protrusions matching into said inner recesses.

4. The robot joint according to any one of claims 1-3, wherein said input encoder assembly comprises an intermediate input encoder holder (249, 349, 449) supporting said encoder reader head, where one side of said intermediate input encoder holder is connected to said drive unit gear and the other side of said intermediate input encoder holder is connected to said drive unit motor unit, and
optionally wherein said input encoder holder forms a cavity (250, 350, 450) wherein said input encoder track is arranged.

5. The robot joint according to any one of claims 1-4, wherein said robot drive unit comprises a motor stator cap (526) arranged at one end of said motor stator, where said motor stator cap is directly connected to said drive unit gear by a number of connecting members (527) arrange on the outside of said motor stator, and
optionally wherein said connecting members are provided as connecting screws which can be screwed into an outer part of said drive unit gear.

6. The robot joint according to claim 5, wherein said motor stator cap forms a cavity between said motor stator and said a drive unit circuit board and wherein said annular brake member is arranged in said cavity between said motor stator and said a drive unit circuit board.

7. The robot joint according to any one of claims 5-6 wherein said drive unit circuit is attached to said motor stator cap.

8. The robot joint according to any one of claims 1-7, wherein said robot drive unit comprises an engagement member configured to engage with said annular brake member and thereby braking rotation of said motor axel.

9. The robot joint according to any one of claims 5-7 and claim 8
wherein said engagement member is attached to said motor stator cap.

10. The robot joint according to any one of claims 1-9 wherein said opening of said robot joint housing is a circular opening.

11. The robot joint according to any one of claims 1-10, wherein a sealing member (318, 418) is arranged between the inner wall of said opening of said robot joint housing and a part of said robot drive unit.

12. The robot joint according to any one of claims 1-11, wherein said a connection flange is angled 90 degrees in relation to said opening.

13. The robot joint according to any one of claims 1-12, wherein said robot housing comprises at most two openings giving access to said joint cavity.

14. The robot joint according to any one of claims 1-13, wherein said robot housing comprises a second opening surrounded by said connection flange.

15. The robot joint according to claim 3 and claim 14, wherein said intermediate input encoder holder comprises a plurality of support protrusions matching said inner protrusions of said inner protrusion of said robot housing and said support protrusions is arranged onto and aligned with said inner protrusions when said robot drive unit is arranged inside said joint cavity.

16. A method of providing a robot joint for a robot arm comprising the steps of:
• providing a robot joint housing comprising an angled joint housing forming a joint cavity having an opening at one end of the robot joint housing and where said joint housing comprises a connection flange configured to be interconnected with a further robot element;
• arranging a robot drive unit inside said joint cavity, by sliding said robot drive unit cavity through said opening;
wherein said robot drive unit is provided by stacking at least the following components in the specified order:
1. a drive unit circuit board (221, 321, 421);
2. a brake assembly (240, 340, 440) comprising an annular brake member (241, 341, 441) arranged on said motor axle;
3. a drive unit motor unit (222, 322, 422) comprising a motor axel (223, 323, 423) with a magnetic motor rotor (224, 324, 424) mounted on said motor axel and a motor stator (224, 324, 424) configured to rotate said motor rotor and said motor axel;
4. an input encoder assembly (245, 345, 445), said input encoder assembly comprises an input encoder track (246, 346, 346) fixed to the motor axel and an input encoder reader head (248) configured to read the position of said input encoder track;
5. a drive unit gear (228, 328, 428) driven by said motor axel and configured to rotate an output flange (229, 329, 429).

17. The method according to claim 16 wherein said robot drive unit is assembled outside said robot joint housing.

18. The method according to any one of claims 16-17 wherein said robot joint is a robot joint according to any one of claims 1-15.

## Patentansprüche

1. Robotergelenk (202, 302, 402) für einen Roboterarm, wobei das Robotergelenk Folgendes umfasst:
• ein abgewinkeltes Gelenkgehäuse (214, 314, 316), das einen Gelenkhohlraum (215, 315, 415) mit einer Öffnung (216, 316, 416) an einem Ende des Robotergelenkgehäuses bildet, wobei das Gelenkgehäuse einen Verbindungsflansch (217, 317, 417) umfasst, der dazu ausgelegt ist, mit einem weiteren Roboterelement verbunden zu werden;
• eine Roboterantriebseinheit (220, 320, 420), die dazu ausgelegt ist, einen Ausgangsflansch (229, 329, 429) des Robotergelenks zu drehen, wobei die Roboterantriebseinheit in dem Gelenkhohlraum durch die Öffnung und in einer Position, in der sich der Ausgangsflansch aus der Öffnung heraus erstreckt, verschiebbar angeordnet ist, wobei die Roboterantriebseinheit die folgenden Komponenten in einer gestapelten Konfiguration umfasst:
∘ eine Antriebseinheitsleiterplatte (221, 321, 421);
∘ eine Antriebseinheitsmotoreinheit (222, 322, 422), die eine Motorachse (223, 323, 423) mit einem magnetischen Motorrotor (224, 324, 424), der auf der Motorachse montiert ist, und einem Motorstator (225, 325, 425), der dazu ausgelegt ist, den Motorrotor und die Motorachse zu drehen, umfasst;
∘ ein Antriebseinheitszahnrad (228, 328, 428), das von der Motorachse angetrieben wird und dazu ausgelegt ist, den Ausgangsflansch (229, 329, 429) zu drehen;
o eine Bremsanordnung (240, 340, 440), die zwischen der Antriebseinheitsleiterplatte und der Antriebseinheitsmotoreinheit angeordnet ist, wobei die Bremsanordnung ein ringförmiges Bremselement (241, 341, 441) umfasst, das auf der Motorachse angeordnet ist;
∘ eine Eingangscodiereranordnung (245, 345, 445), die zwischen der Antriebseinheitsmotoreinheit und dem Antriebseinheitsgetriebe angeordnet ist, wobei die Eingangscodiereranordnung eine Eingangscodiererspur (246, 346, 446), die an der Motorachse befestigt ist, und einen Eingangscodiererlesekopf (248), der dazu ausgelegt ist, die Position der Eingangscodiererspur zu lesen, umfasst.

2. Robotergelenk nach Anspruch 1, wobei ein innerer Querschnitt des Gelenkhohlraums mit dem äußeren Querschnitt der Roboterantriebseinheit übereinstimmt.

3. Robotergelenk nach einem der Ansprüche 1-2, wobei die innere Seitenwand des Roboterhohlraums mit inneren Aussparungen versehen ist und die Roboterantriebseinheit mit äußeren Vorsprüngen versehen ist, die in die inneren Aussparungen passen.

4. Robotergelenk nach einem der Ansprüche 1-3, wobei die Eingangscodiereranordnung einen Zwischeneingangscodiererhalter (249, 349, 449) umfasst, der den Codiererlesekopf trägt, wobei eine Seite des Zwischeneingangscodiererhalters mit dem Antriebseinheitsgetriebe verbunden ist und die andere Seite des Zwischeneingangscodiererhalters mit der Antriebseinheitsmotoreinheit verbunden ist, und
optional wobei der Eingangscodiererhalter einen Hohlraum (250, 350, 450) bildet, in dem die Eingangscodiererspur angeordnet ist.

5. Robotergelenk nach einem der Ansprüche 1-4, wobei die Roboterantriebseinheit eine Motorstatorkappe (526) umfasst, die an einem Ende des Motorstators angeordnet ist, wobei die Motorstatorkappe über eine Anzahl von Verbindungselementen (527), die an der Außenseite des Motorstators angeordnet sind, direkt mit dem Antriebseinheitszahnrad verbunden ist und
optional wobei die Verbindungselemente als Verbindungsschrauben vorgesehen sind, die in einen Außenteil des Antriebseinheitszahnrads einschraubbar sind.

6. Robotergelenk nach Anspruch 5, wobei die Motorstatorkappe einen Hohlraum zwischen dem Motorstator und der Antriebseinheitsleiterplatte bildet und wobei das ringförmige Bremselement in dem Hohlraum zwischen dem Motorstator und der Antriebseinheitsleiterplatte angeordnet ist.

7. Robotergelenk nach einem der Ansprüche 5-6, wobei die Antriebseinheitsschaltung an der Motorstatorkappe angebracht ist.

8. Robotergelenk nach einem der Ansprüche 1-7, wobei die Roboterantriebseinheit ein Eingriffselement umfasst, das dazu ausgelegt ist, mit dem ringförmigen Bremselement in Eingriff zu treten und dadurch die Drehung der Motorachse zu bremsen.

9. Robotergelenk nach einem der Ansprüche 5-7 und Anspruch 8, wobei das Eingriffselement an der Motorstatorkappe befestigt ist.

10. Robotergelenk nach einem der Ansprüche 1-9, wobei die Öffnung des Robotergelenkgehäuses eine kreisförmige Öffnung ist.

11. Robotergelenk nach einem der Ansprüche 1-10, wobei ein Dichtungselement (318, 418) zwischen der Innenwand der Öffnung des Robotergelenkgehäuses und einem Teil der Roboterantriebseinheit angeordnet ist.

12. Robotergelenk nach einem der Ansprüche 1-11, wobei ein Verbindungsflansch in Bezug auf die Öffnung um 90 Grad abgewinkelt ist.

13. Robotergelenk nach einem der Ansprüche 1-12, wobei das Robotergehäuse höchstens zwei Öffnungen umfasst, die Zugang zu dem Gelenkhohlraum ermöglichen.

14. Robotergelenk nach einem der Ansprüche 1-13, wobei das Robotergehäuse eine zweite Öffnung umfasst, die von dem Verbindungsflansch umgeben ist.

15. Robotergelenk nach Anspruch 3 und Anspruch 14, wobei der Zwischeneingangscodiererhalter mehrere Stützvorsprünge umfasst, die mit den inneren Vorsprüngen des inneren Vorsprungs des Robotergehäuses übereinstimmen, und wobei die Stützvorsprünge auf den inneren Vorsprüngen angeordnet und mit diesen ausgerichtet sind, wenn die Roboterantriebseinheit innerhalb des Gelenkhohlraums angeordnet ist.

16. Verfahren zum Vorsehen eines Robotergelenks für einen Roboterarm, das die folgenden Schritte umfasst:
• Vorsehen eines Robotergelenkgehäuses, das ein abgewinkeltes Gelenkgehäuse umfasst, das einen Gelenkhohlraum mit einer Öffnung an einem Ende des Robotergelenkgehäuses bildet, und wobei das Gelenkgehäuse einen Verbindungsflansch umfasst, der dazu ausgelegt ist, mit einem weiteren Roboterelement verbunden zu werden;
• Anordnen einer Roboterantriebseinheit innerhalb des Gelenkhohlraums durch Schieben des Roboterantriebseinheitshohlraums durch die Öffnung;
wobei die Roboterantriebseinheit vorgesehen wird, indem zumindest die folgenden Komponenten in der angegebenen Reihenfolge gestapelt werden:
1. eine Antriebseinheitsleiterplatte (221, 321, 421);
2. eine Bremsanordnung (240, 340, 440), die ein ringförmiges Bremselement (241, 341, 441) umfasst, das auf der Motorachse angeordnet ist;
3. eine Antriebseinheitsmotoreinheit (222, 322, 422), die eine Motorachse (223, 323, 423) mit einem magnetischen Motorrotor (224, 324, 424), der auf der Motorachse montiert ist, und einem Motorstator (224, 324, 424) umfasst, der dazu ausgelegt ist, den Motorrotor
und die Motorachse zu drehen;
4. eine Eingangscodiereranordnung (245, 345, 445), wobei die Eingangscodiereranordnung eine Eingangscodiererspur (246, 346, 346), die an der Motorachse befestigt ist, und einen Eingangscodiererlesekopf (248), der dazu ausgelegt ist, die Position der Eingangscodiererspur zu lesen, umfasst;
5. ein Antriebseinheitszahnrad (228, 328, 428), das von der Motorachse angetrieben wird und dazu ausgelegt ist, einen Ausgangsflansch (229, 329, 429) zu drehen.

17. Verfahren nach Anspruch 16, wobei die Roboterantriebseinheit außerhalb des Robotergelenkgehäuses montiert wird.

18. Verfahren nach einem der Ansprüche 16-17, wobei das Robotergelenk ein Robotergelenk nach einem der Ansprüche 1-15 ist.

## Revendications

1. Articulation de robot (202, 302, 402) pour un bras de robot, ladite articulation de robot comprenant :
• une enveloppe d'articulation angulaire (214, 314, 316) formant une cavité d'articulation (215, 315, 415) présentant une ouverture (216, 316, 416) à une extrémité de l'enveloppe d'articulation de robot, ladite enveloppe d'articulation comportant une partie saillante de raccordement (217, 317, 417) conçue pour être raccordée avec un autre élément de robot ;
• une unité d'entraînement de robot (220, 320, 420) conçue pour imprimer une rotation à une partie saillante de sortie (229, 329, 429) de ladite articulation de robot, ladite unité d'entraînement de robot étant disposée à coulissement dans ladite cavité d'articulation à travers ladite ouverture et dans une position dans laquelle ladite partie saillante de sortie s'étend hors de ladite ouverture, ladite unité d'entraînement de robot comportant les composants suivants en configuration empilée :
∘ une carte de circuits d'unité d'entraînement (221, 321, 421) ;
∘ une unité de moteur d'unité d'entraînement (222, 322, 422) comprenant un axe de moteur (223, 323, 423) avec un rotor de moteur magnétique (224, 324, 424) monté sur ledit axe de moteur et un stator de moteur (225, 325, 425) conçu pour imprimer une rotation audit rotor de moteur et audit axe de moteur ;
o un engrenage d'unité d'entraînement (228, 328, 428) entraîné par ledit axe de moteur et conçu pour imprimer une rotation à ladite partie saillante de sortie (229, 329, 429) ;
∘ un ensemble de freinage (240, 340, 440) disposé entre ladite carte de circuits d'unité d'entraînement et ladite unité de moteur d'unité d'entraînement, ledit ensemble de freinage comprenant un élément de freinage annulaire (241, 341, 441) disposé sur ledit axe de moteur ;
∘ un ensemble codeur d'entrée (245, 345, 445) disposé entre l'unité de moteur d'unité d'entraînement et l'engrenage d'unité d'entraînement, ledit ensemble codeur d'entrée comprenant une piste de codeur d'entrée (246, 346, 446) fixée audit axe de moteur et une tête de lecture de codeur d'entrée (248) conçue pour lire la position de ladite piste de codeur d'entrée.

2. Articulation de robot selon la revendication 1, dans laquelle une section transversale intérieure de ladite cavité d'articulation correspond à la section transversale extérieure de ladite unité d'entraînement de robot.

3. Articulation de robot selon l'une quelconque des revendications 1 et 2, dans laquelle la paroi latérale intérieure de ladite cavité de robot est pourvue de renfoncements intérieurs et ladite unité d'entraînement de robot est pourvue de saillies extérieures correspondant auxdits renfoncements intérieurs.

4. Articulation de robot selon l'une quelconque des revendications 1 à 3, dans laquelle ledit ensemble codeur d'entrée comprend un support de codeur d'entrée intermédiaire (249, 349, 449) supportant ladite tête de lecture de codeur, un côté dudit support de codeur d'entrée intermédiaire étant raccordé audit engrenage d'unité d'entraînement et l'autre côté dudit support de codeur d'entrée intermédiaire étant raccordé à ladite unité de moteur d'unité d'entraînement, et
dans laquelle, éventuellement, ledit support de codeur d'entrée forme une cavité (250, 350, 450) dans laquelle ladite piste de codeur d'entrée est disposée.

5. Articulation de robot selon l'une quelconque des revendications 1 à 4, dans laquelle ladite unité d'entraînement de robot comprend un chapeau de stator de moteur (526) placé à une extrémité dudit stator de moteur, ledit chapeau de stator de moteur étant directement raccordé audit engrenage d'unité d'entraînement par un certain nombre d'éléments de raccordement (527) placés sur l'extérieur dudit stator de moteur, et
dans laquelle, éventuellement, lesdits éléments de raccordement se présentent sous la forme de vis d'assemblage pouvant être vissées dans une partie extérieure dudit engrenage d'unité d'entraînement.

6. Articulation de robot selon la revendication 5, dans laquelle ledit chapeau de stator de moteur forme une cavité entre ledit stator de moteur et ladite carte de circuits d'unité d'entraînement et dans laquelle ledit élément de freinage annulaire est disposé dans ladite cavité entre ledit stator de moteur et ladite carte de circuits d'unité d'entraînement.

7. Articulation de robot selon l'une quelconque des revendications 5 et 6 dans laquelle ledit circuit d'unité d'entraînement est fixé audit chapeau de stator de moteur.

8. Articulation de robot selon l'une quelconque des revendications 1 à 7, dans laquelle ladite unité d'entraînement de robot comprend un élément de mise en prise conçu pour venir en prise avec ledit élément de freinage annulaire et freiner ainsi la rotation dudit axe de moteur.

9. Articulation de robot selon l'une quelconque des revendications 5 à 7 et la revendication 8, dans laquelle ledit élément de mise en prise est fixé audit chapeau de stator de moteur.

10. Articulation de robot selon l'une quelconque des revendications 1 à 9, dans laquelle ladite ouverture de ladite enveloppe d'articulation de robot est une ouverture circulaire.

11. Articulation de robot selon l'une quelconque des revendications 1 à 10, dans laquelle un élément d'étanchéité (318, 418) est placé entre la paroi intérieure de ladite ouverture de ladite enveloppe d'articulation de robot et une partie de ladite unité d'entraînement de robot.

12. Articulation de robot selon l'une quelconque des revendications 1 à 11, dans laquelle ladite partie saillante de raccordement est placée à un angle de 90 degrés par rapport à ladite ouverture.

13. Articulation de robot selon l'une quelconque des revendications 1 à 12, dans laquelle ladite enveloppe de robot comprend au plus deux ouvertures donnant accès à ladite cavité d'articulation.

14. Articulation de robot selon l'une quelconque des revendications 1 à 13, dans laquelle ladite enveloppe de robot comprend une seconde ouverture entourée par ladite partie saillante de raccordement.

15. Articulation de robot selon la revendication 3 et la revendication 14, dans laquelle ledit support de codeur d'entrée intermédiaire comprend une pluralité de saillies de support correspondant auxdites saillies intérieures de ladite saillie intérieure de ladite enveloppe de robot et lesdites saillies de support sont placées sur lesdites saillies intérieures et alignées avec celles-ci lorsque ladite unité d'entraînement de robot est placée à l'intérieur de ladite cavité d'articulation.

16. Procédé de réalisation d'une articulation de robot pour un bras de robot comprenant les étapes suivantes :
• préparer une enveloppe d'articulation de robot comprenant une enveloppe d'articulation angulaire formant une cavité d'articulation présentant une ouverture à une extrémité de l'enveloppe d'articulation de robot et ladite enveloppe d'articulation comportant une partie saillante de raccordement conçue pour être raccordée avec un autre élément de robot ;
• disposer à l'intérieur de ladite cavité d'articulation une unité d'entraînement de robot, en faisant coulisser ladite cavité d'unité d'entraînement de robot à travers ladite ouverture ;
dans lequel ladite unité d'entraînement de robot est réalisée en empilant au moins les composants suivants dans l'ordre spécifié :
1. une carte de circuits d'unité d'entraînement (221, 321, 421) ;
2. un ensemble de freinage (240, 340, 440) comprenant un élément de freinage annulaire (241, 341, 441) disposé sur ledit axe de moteur ;
3. une unité de moteur d'unité d'entraînement (222, 322, 422) comprenant un axe de moteur (223, 323, 423) avec un rotor de moteur magnétique (224, 324, 424) monté sur ledit axe de moteur et un stator de moteur (224, 324, 424) conçu pour imprimer une rotation audit rotor
de moteur et audit axe de moteur ;
4. un ensemble codeur d'entrée (245, 345, 445), ledit ensemble codeur d'entrée comprenant une piste de codeur d'entrée (246, 346, 346) fixée à l'axe de moteur et une tête de lecture de codeur d'entrée (248) conçue pour lire la position de ladite piste de codeur d'entrée ;
5. un engrenage d'unité d'entraînement (228, 328, 428) entraîné par ledit axe de moteur et conçu pour imprimer une rotation à une partie saillante de sortie (229, 329, 429).

17. Procédé selon la revendication 16, dans lequel ladite unité d'entraînement de robot est assemblée à l'extérieur ladite enveloppe d'articulation de robot.

18. Procédé selon l'une quelconque des revendications 16 et 17, dans lequel ladite articulation de robot est une articulation de robot selon l'une quelconque des revendications 1 à 15.
